# EUROPÄISCHE PATENTSCHRIFT

(11) **EP 1 358 405 B1**
(45) Veröffentlichungstag und Bekanntmachung des Hinweises auf die Patenterteilung: **23.04.2008**
(21) Anmeldenummer: 02704614.3
(22) Anmeldetag: 28.01.2002
(51) Int. Cl.: B60W 30/18, F02N 11/08, B60W 10/06, B60W 10/02, B60W 10/08, B60W 20/00, F02N 11/04, F02D 17/02

(54) **VERFAHREN ZUM STEUERN DES ANTRIEBSSTRANGS EINES KRAFTFAHRZEUGS**
METHOD FOR CONTROLLING THE DRIVE TRAIN OF A MOTOR VEHICLE
PROCEDE DE COMMANDE DE L'ENSEMBLE DE TRANSMISSION D'UN VEHICULE AUTOMOBILE

(30) Priorität: 07.02.2001 DE 10105578
(43) Veröffentlichungstag der Anmeldung: 05.11.2003
(73) Patentinhaber: VDO Automotive AG, 93055 Regensburg (DE)
(72) Erfinder: PROBST, Gregor, 84028 Landshut (DE); GUTKNECHT-STÖHR, Florian, 93047 Regensburg (DE); GRASSL, Georg, 93138 Hainsacker (DE); RAMPELTSHAMMER, Martin, 93055 Regensburg (DE)
(86) Internationale Anmeldenummer: PCT/DE2002/000286
(87) Internationale Veröffentlichungsnummer: WO 2002/063163

(56) Entgegenhaltungen:
- EP-A- 0 878 339
- DE-A- 4 213 589
- DE-A- 4 302 500

## Beschreibung

Die Erfindung betrifft ein Verfahren zum Steuern des Antriebsstrangs eines Kraftfahrzeugs gemäß dem Oberbegriff des Patentanspruchs 1.

Zukünftige Fahrzeuggenerationen werden neben einer herkömmlichen Brennkraftmaschine - im Folgenden auch als Verbrennungsmotor bezeichnet - zunehmend mit einer Startereinheit, zum Beispiel in Form eines Elektromotors, zum automatischen Starten des Verbrennungsmotors ausgerüstet sein. Der Begriff Startereinheit ist hierbei und im Folgenden allgemein zu verstehen und schließt insbesondere auch Kurbelwellen-Startergeneratoren - im Folgenden auch als integrierte Startergeneratoren (ISG) bezeichnet - ein. Ein derartiger integrierter Starter-Generator kann dann auch als zusätzliches Antriebsaggregat für das Kraftfahrzeug eingesetzt werden (Hybridfahrzeug). Als Startereinheit ist aber beispielsweise auch eine mit Druckluft betriebene Startvorrichtung für den Verbrennungsmotor denkbar.

Aus der älteren Anmeldung DE 10047906.5 ist eine Antriebsstrangsteuerung für ein Kraftfahrzeug mit mindestens zwei Antriebsaggregaten und einem Getriebe bekannt, bei der abhängig von einem Drehmoment-Sollwert und vom Ladezustand der Fahrzeugbatterie ein Soll-Betriebszustand des Antriebsstrangs festgelegt wird. Sind weder das Fahrpedal noch das Bremspedal des Kraftfahrzeugs betätigt, wird oder bleibt eine Kupplung, die den Verbrennungsmotor mit dem Getriebe verbindet, geöffnet und der Verbrennungsmotor läuft im Leerlaufbetrieb weiter. Aus diesem so genannten "Segelbetrieb" heraus kann zusätzlich der Verbrennungsmotor abgeschaltet werden. Über die zeitliche Abfolge des Öffnens der Kupplung und des Abschaltens des Verbrennungsmotors ist dabei keine Aussage gemacht.

Aus der Druckschrift DE 42 13 589 A1 (nächtsliegenden Stand der Technik) ist ein Verfahren zum Betrieb eines Kraftfahrzeugs bekannt, bei dem der Verbrennungsmotor abgeschaltet wird, wenn während einer festgelegten Wartezeit nach einem Öffnen des Antriebsstrangs kein Antriebsmoment vom Verbrennungsmotor angefordert wird. Die Wartezeit ist dabei abhängig von verschiedenen Sensor- und Schaltersignalen.

Der Erfindung liegt daher die Aufgabe zugrunde, ein Verfahren zum Steuern des Antriebsstrangs eines Kraftfahrzeugs mit einem Verbrennungsmotor als Antriebsaggregat, einer Startereinheit zum Starten des Verbrennungsmotors und einem Getriebe zu schaffen, durch das der Betrieb des Kraftfahrzeugs durch intelligentes Abschalten des Verbrennungsmotors im Segelbetrieb bezüglich Kraftstoffverbrauch, Schadstoffemissionen, Geräuschemission, Fahrbarkeit, Fahrleistung und Sicherheit verbessert wird.

Diese Aufgabe wird erfindungsgemäß durch ein Verfahren mit den Merkmalen des Patentanspruchs 1 gelöst. Weitere vorteilhafte Ausgestaltungen der Erfindung ergeben sich aus den Unteransprüchen.

Ist in einem Kraftfahrzeug ein Verbrennungsmotor als Antriebsaggregat vorgesehen, so kann vom Verbrennungsmotor sowohl ein Antriebs- als auch ein Bremsmoment, insbesondere für Bremsassistenzfunktionen, angefordert werden. Des Weiteren kann vom Verbrennungsmotor auch ein Drehmoment zum Betreiben von Nebenaggregaten, zum Beispiel einer Klimaanlage, angefordert werden. Nun treten im Betrieb eines Kraftfahrzeugs aber auch Situationen auf, in denen bei laufendem Verbrennungsmotor weder ein Antriebs- oder Bremsmoment noch ein Drehmoment für ein Nebenaggregat vom Verbrennungsmotor angefordert wird. In derartigen Situationen wird der Antriebsstrang - je nach Fahrzeugkonfiguration zum Beispiel durch Öffnen einer Trockenkupplung oder einer Wandlerüberbrückungskupplung - geöffnet. Durch das Öffnen des Antriebsstrangs wird der Verbrennungsmotor von den Rädern des Kraftfahrzeugs getrennt und somit die Raddrehzahl von der Motordrehzahl entkoppelt. Wird während einer festgelegten Wartezeit nach dem Öffnen des Antriebsstrangs weiterhin kein Drehmoment vom Verbrennungsmotor angefordert, so wird nach Ablauf der Wartezeit der Verbrennungsmotor abgeschaltet. Dabei wird die Wartezeit zwischen dem Öffnen der Kupplung und dem Abschalten des Verbrennungsmotors abhängig von der aktuellen Betriebssituation des Kraftfahrzeugs festgelegt.

Die aktuelle Betriebssituation des Kraftfahrzeugs - zum Beispiel bezüglich Umwelt, Verkehr, Topologie, Fahrertyp und Last, insbesondere aber auch bezüglich Ladezustand der Fahrzeugbatterie - wird dabei durch eine Situationserkennungsschaltung bestimmt. Hierzu werden Eingangssignale aufbereitet, die von verschiedenen Sensoren, von anderen Steuergeräten oder von externen Informationsquellen geliefert werden.

Durch die Einführung einer variablen, von der aktuellen Betriebssituation abhängigen Wartezeit zwischen dem Öffnen des Antriebsstrangs und dem Abschalten des Verbrennungsmotors kann der Fahrkomfort deutlich erhöht werden. Außerdem kann auf ökonomische, sicherheitsrelevante und umweltbezogene Gegebenheiten besser reagiert werden.

Ein Ausführungsbeispiel der Erfindung wird im Folgenden anhand der Zeichnungen erläutert. Es zeigen:
- Figur 1: eine schematische Darstellung eines Antriebsstrangs eines Kraftfahrzeugs mit zwei Antriebsaggregaten,
- Figur 2: ein Blockschaltbild einer Steuerungskomponente zum Ermitteln der Wartezeit bis zum Abschalten des Verbrennungsmotors im Segelbetrieb und
- Figur 3: einen schematischen Verlauf einer Ausgangsvariable Wartezeit eines Fuzzy-Systems.

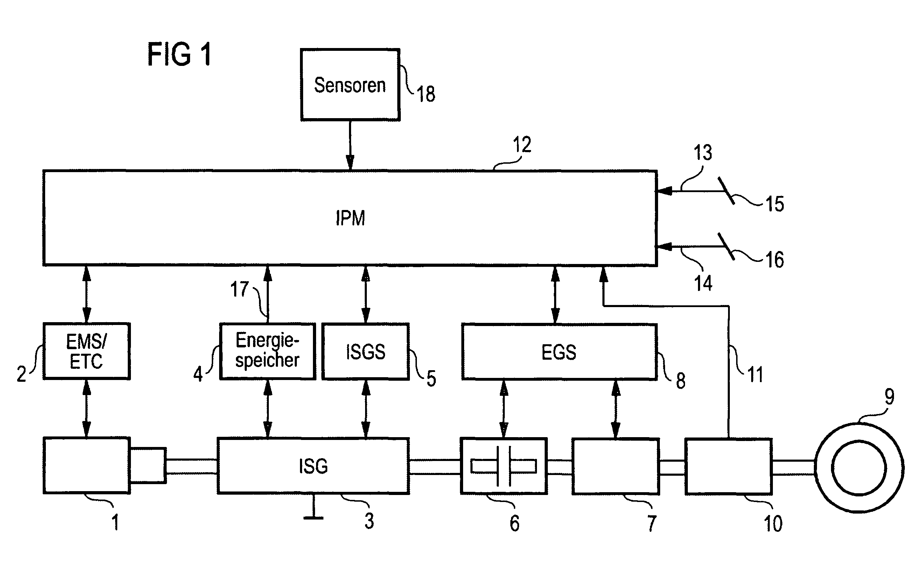

Die in Figur 1 dargestellte Anordnung zeigt den Antriebsstrang eines Kraftfahrzeuges, der von einem Verbrennungsmotor 1 angetrieben wird, wobei der Verbrennungsmotor 1 herkömmlich aufgebaut ist und deshalb nur schematisch dargestellt ist. Der Verbrennungsmotor 1 wird dabei durch eine elektronische Motorsteuerung (EMS) 2 gesteuert, die auch die Funktion einer elektronischen Drosselklappenregelung (ETC) übernehmen kann. Ausgangsseitig ist der Verbrennungsmotor 1 über eine Welle mit einem Elektromotor in Form eines integrierten Startergenerators (ISG) 3 verbunden, durch den bei laufendem Verbrennungsmotor 1 ein Energiespeicher 4 geladen werden kann. Der Energiespeicher 4 ist dabei vorteilhaft als elektrische Batterie ausgebildet, kann aber ebenso als Brennstoffzelle oder als Hochleistungs-Kondensator in Form von Ultra-Caps ausgebildet sein. Bei stillstehendem Verbrennungsmotor 1 kann der integrierte Startergenerator 3 dagegen zum Anlassen des Verbrennungsmotors 1 verwendet werden. Der integrierte Startergenerator 3 ist dabei vorzugsweise als Asynchronmaschine ausgebildet, kann aber auch als Synchronmaschine oder Gleichstrommotor ausgebildet sein. Gesteuert wird der integrierte Startergenerator 3 durch eine ISG-Steuereinheit (ISGS) 5.

Vorteilhaft kann zwischen dem Verbrennungsmotor 1 und dem integrierten Startergenerator 3 eine nicht dargestellte Kupplung angeordnet sein, die es ermöglicht, den Verbrennungsmotor 1 von dem Antriebsstrang abzutrennen. Dies ermöglicht eine Entkopplung der Drehzahl des integrierten Startergenerators 3 von dem Verbrennungsmotor 1, wodurch die nur Verlustenergie erzeugende Bremswirkung des Verbrennungsmotor 1 ausgeschaltet wird und die elektrisch nutzbare Bremswirkung des Startergenerators verbessert wird.

Weiterhin ist in dem Antriebsstrang eine Kupplung 6 angeordnet, durch die der Verbrennungsmotor 1 und der integrierte Startergenerator 3 mit einem Getriebe 7 verbunden oder von diesem getrennt werden kann. Die Kupplung 6 kann dabei, je nach Fahrzeugkonfiguration, beispielsweise als Trockenkupplung oder Wandlerüberbrückungskupplung ausgeführt sein. Die Kupplung 6 und das Getriebe 7 werden von einer elektronischen Getriebesteuerung (EGS) 8 angesteuert, wobei die elektronische Getriebesteuerung 8 verschiedene Übersetzungsverhältnisse ü des Getriebes 7 einstellen kann. Die Umschaltung zwischen den verschiedenen Übersetzungsverhältnissen erfolgt hierbei durch die elektronische Getriebesteuerung 8 automatisch durch eine entsprechende Regelung der Kupplung 6 und der Aktuatoren des Getriebes 7, z. B. für die Gassen- und Gangstellungen bei Ausführung des Getriebes 7 als automatisiertes Handschaltgetriebe. Alternativ zu einem Getriebe mit festen Gangstufen kann auch ein Getriebe mit kontinuierlich einstellbarem Übersetzungsverhältnis verwendet werden. Ebenso ist es unwesentlich, ob das Getriebe 7 als konventionelles Automatikgetriebe mit Planetenradsatz, als automatisiertes (automatisches) Handschaltgetriebe oder als Doppelkupplungsgetriebe ausgeführt ist.

Ferner ist der Antriebsstrang über ein nicht dargestelltes Differential mit den Rädern 9 des Kraftfahrzeugs verbunden. Aus Gründen der Übersichtlichkeit ist in der Figur beispielhaft nur ein Rad 9 dargestellt. Schließlich ist in dem Antriebsstrang ein Drehzahlsensor 10 angeordnet, der laufend die aktuelle Drehzahl N der Getriebeausgangswelle oder ein vergleichbares Signal, wie Raddrehzahl oder Fahrzeuggeschwindigkeit, misst und über eine Leitung 11 an ein systemübergreifendes Antriebsstrangmanagement (IPM) 12 übermittelt. Als weitere Eingangssignale erhält das Antriebsstrangmanagement 12 unter anderem über Leitungen 13 und 14 Signale, die den Fahrerwunsch bezüglich eines Antriebsmoments bzw. eines Bremsmoments charakterisieren. Diese Signale können beispielsweise durch Auswertung der Stellungen des Fahrpedals 15 bzw. des Bremspedals 16 gewonnen werden. Des Weiteren wird dem Antriebsstrangmanagement 12 über eine Leitung 17 ein Signal übermittelt, das den Ladezustand des Energiespeichers 4 charakterisiert. Außerdem werden dem Antriebsstrangmanagement 12 weitere Signale von symbolisch zu einem Block zusammengefassten Sensoren 18 und eventuell auch Daten aus den dezentralen Steuereinrichtungen 2, 5 und 8 oder aus externen Signalquellen, z. B. über GPS, oder auch Daten aus Navigationssystemen zugeführt, die eine Ermittlung der aktuellen Betriebssituation ermöglichen.

Abhängig von den zugeführten Signalen führt das Antriebsstrangmanagement 12 eine koordinierte Berechnung der zentralen Betriebsparameter des Antriebsstrangs durch. So werden im Antriebsstrangmanagement 12 z. B. Getriebeübersetzungen und Soll-Drehmomente für die Antriebsaggregate, aber auch Antriebsart und Betriebspunkte festgelegt. Diese Informationen werden den dezentralen Steuerungen oder Steuereinrichtungen 2, 5 und 8 in Form von Steuersignalen zugeführt. Die Steuerungen oder Steuereinrichtungen 2, 5 und 8 erzeugen abhängig von diesen Steuersignalen Stellsignale für die einzelnen Aggregate oder Bestandteile des Antriebsstrangs. Das Antriebsstrangmanagement ist in der Figur als eigenständige Steuereinheit dargestellt, kann aber ebenso in eine oder mehrere der dezentralen Steuerungen oder Steuereinrichtungen 2, 5 oder 8 integriert sein. Ebenso sind auch die dezentralen Steuereinrichtungen 2, 5 und 8 als eigenständige Steuereinheiten dargestellt. Auch diese Einheiten können aber in beliebiger Art und Weise kombiniert in einem oder mehreren multifunktionalen Steuergeräten untergebracht werden.

Vom Verbrennungsmotor 1 kann sowohl ein Antriebs- als auch ein Bremsmoment, insbesondere für Bremsassistenzfunktionen, angefordert werden. Des Weiteren kann vom Verbrennungsmotor auch ein Drehmoment zum Betreiben von, insbesondere dem Komfort und der Sicherheit dienenden Nebenaggregaten, zum Beispiel einer Klimaanlage, angefordert werden. Nun treten im Betrieb eines Kraftfahrzeugs aber auch Situationen auf, in denen bei laufendem Verbrennungsmotor weder ein Antriebs- oder Bremsmoment noch ein Drehmoment für ein Nebenaggregat vom Verbrennungsmotor angefordert wird. Die Erkennung derartiger Situationen ist aber nicht Gegenstand der Erfindung und in entscheidendem Maße abhängig von der Konfiguration des Antriebsstrangs und der zugehörigen Steuereinheiten des Kraftfahrzeugs. Beispielhaft seien hier nur einige Situationen genannt, die zu einem Öffnen des Antriebsstrangs führen können:
1. Von keiner Fahrzeugkomponente wird ein Drehmoment angefordert: Der Fahrer betätigt weder das Fahrpedal noch das Bremspedal - ein derartiges Verhalten wird häufig als "passiver Fahrer" bezeichnet. Keines der vorhandenen Nebenaggregate ist aktiv.
2. Die angefoderten Momente werden von anderen Momentenquellen im Kraftfahrzeug geliefert: Ein durch Betätigen des Bremspedals vom Fahrer gefordertes Bremsmoment wird häufig nur durch die Betriebsbremse realisiert. Vom Verbrennungsmotor wird vor allem dann ein Bremsmoment angefordert, wenn eine Bremsassistenzfunktion, insbesondere eine Bremsrückschaltung, aktiviert wird. Ist ein Elektromotor als Startereinheit vorgesehen, kann ein Momentenwunsch, zum Beispiel für ein Nebenaggregat, auch vom Elektromotor realisiert werden. Ist der Elektromotor zusätzlich als Antriebsaggregat ausgelegt (Hybridantrieb), so kann auch ein vom durch Betätigen des Fahrpedals angefordertes Antriebsmoment möglicher Weise durch den Elektromotor zur Verfügung gestellt werden. In modernen Kraftfahrzeugen sind Steuerungskomponenten vorgesehen, die die Betriebsstrategie des Fahrzeugs festlegen. Dabei werden auch die Momentenanforderungen an die vorhandenen Momentenquellen innerhalb des Fahrzeugs verteilt.
3. Automatikgetriebe und automatisierte Handschaltgetriebe verfügen häufig über eine sogenannte "Anhaltefunktion". Diese wertet bei Drehzahlen nahe der Leerlaufdrehzahl den Drehzahlgradienten aus und öffnet davon abhängig die Kupplung. Liegt der Drehzahlgradient dabei über einem vorgegeben Schwellwert, so wird eine sogenannte "Abwürgefunktion" aktiv, die ein möglichst rasches Öffnen der Kupplung veranlasst.

Je nach Fahrzeugkonfiguration sind weitere Situationen denkbar, die zu einem Öffnen des Antriebsstrangs führen. Das Erkennen einer derartigen Situation und auch die Art und Weise des Öffnens des Antriebsstrangs - ob über eine Nass- oder Trockenkupplung oder auch über eine Wandlerüberbrückungskupplung - ist dabei für die Erfindung unwesentlich. Wesentlich ist lediglich, dass der Verbrennungsmotor nach einer festgelegten Wartezeit nach dem Öffnen des Antriebsstrangs abgeschaltet wird, wenn während der Wartezeit weiterhin kein Drehmoment vom Verbrennungsmotor angefordert wird.

Erfindungsgemäß weist das Antriebsstrangmanagement 12 eine Situationserkennungsschaltung (kurz: Situationserkennung) 20 und eine Fuzzy-Logik 21 auf. In der Situationserkennung 20 werden mehrere Eingangssignale aufbereitet, die von verschiedenen Sensoren, von anderen Steuergeräten oder von externen Informationsquellen geliefert werden. Die Eingangssignale werden in der Situationserkennung 20 in charakteristische Kenngrößen gewandelt, die von der Fuzzy-Logik 21 verarbeitbar sind.

Die Eingangssignale für die Situationserkennung 20 können dabei beispielsweise folgende Informationen beinhalten:
- Zustandsinformationen über die vom Fahrer zu betätigende Startvorrichtung des Kraftfahrzeugs - Zündschlüssel, Fingerprintsensor, Keyless-Go-Systeme,
- Informationen über die Stellung der Fahrzeugtüren - z. B. durch Auswerten von Türkontakten,
- Informationen über die aktuelle Stellung des Wählhebels für den Gang oder die Getriebeübersetzung,
- Informationen über den Zustand der Parkbremse,
- Informationen über Topographie, Strassenbeschaffenheit und Umweltbedingungen - z. B. aus Navigationssystemen oder Informationskanälen,
- Informationen aus fahrbahnnahen Informationsquellen, wie z. B. Informationssignale von Ampeln oder Parkflächen,
- Informationen über den zurückgelegten Weg und die Fahrzeuggeschwindigkeit und
- Zustandsinformationen über die Lenkung des Kraftfahrzeugs

Des Weiteren können der Situationserkennung 20 auch den Fahrertyp und/oder die Last - Fahrbahnsteigung und/oder Beladung - charakterisierende Signale zugeführt werden. Mögliche Realisierungen für eine derartige Fahrertyp- und Lasterkennung sind in der EP 0 576 703 B1 ausführlich beschrieben.

Abhängig von der Ausrüstung, also den verfügbaren Komponenten und Systemen, in einem Kraftfahrzeug können der Situationserkennung 20 im allgemeinen alle Signale zugeführt werden, die dazu geeignet sind, die aktuelle Betriebssituation des Kraftfahrzeugs zu charakterisieren.

Die beschriebenen und gegebenenfalls weitere Eingangssignale werden in der Situationserkennung 20 ausgewertet und in charakteristische, die momentane Betriebssituation des Kraftfahrzeugs charakterisierende Größen umgewandelt, die von der Fuzzy-Logik 21 verarbeitbar sind.

Die Ausgangsgrößen der Situationserkennung 20 können beispielsweise folgende Betriebssituationen charakterisieren:
- Befahren einer Autobahn,
- Befahren einer Landstraße,
- Ortsdurchfahrt,
- Parkiervorgang,
- Anhaltevorgänge - an einer Ampel, im Stop-and-go-Verkehr, an einem Stauende, an einer Kreuzung oder an einer Baustelle,
- Notfahrprogramm ist aktiviert,
- Werkstattmodus ist aktiviert,
- Nachtfahrt,
- schlechte Sicht,
- Umwelteinflüsse, insbesondere Temperatur,
- Zusätzliche Verbraucher, zum Beispiel Klimaanlage, sind aktiviert oder
- Ladezustand der Fahrzeugbatterie

Abhängig von diesen und eventuell weiteren die Fahrsituation charakterisierenden Größen wird von der Fuzzy-Logik 21 eine Wartezeit festgelegt, nach der der Verbrennungsmotor 1 abgeschaltet wird, falls bis dahin weiterhin weder eine Antriebsmoment-Anforderung noch eine Bremsmoment-Anforderung für den Verbrennungsmotor 1 vorliegt. Bei der Festlegung dieser Wartezeit können von der Fuzzy-Logik 21 außerdem unmittelbar Informationen über die aktuelle Last und den Fahrertyp verarbeitet werden.

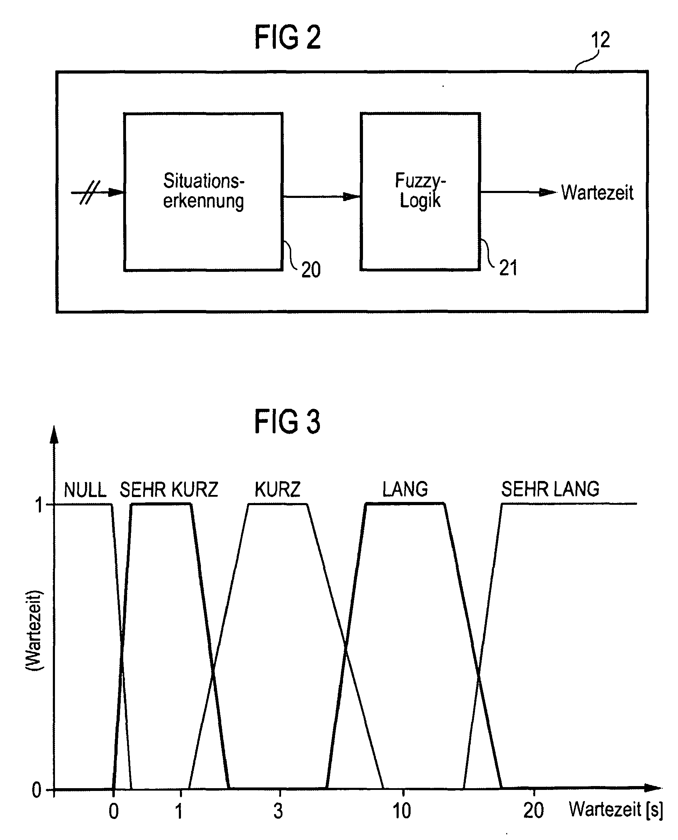

Im Folgenden werden nun mögliche Fuzzy-Regeln für die Fuzzy-Logik 21 dargestellt, die eine Zuweisung verschiedener Wartezeiten zu erkannten Betriebssituationen - innerhalb der Fuzzy-Regeln vereinfachend als Situationen bezeichnet - ermöglichen. Eine mögliche Zuordnung der Fuzzy-Parameter bezüglich der Wartezeit - Null, Sehr kurz, Kurz, Lang und Sehr lang- zu realen Zeitintervallen ist aus Figur 3 zu entnehmen.

| | |
|---|---|
| Regel 1: | WENN (Situation = Anhalten) |
| | DANN Wartezeit = Null |
| Regel 2: | WENN (Situation = Landstraße) |
| | DANN Wartezeit = Kurz |
| Regel 3: | WENN (Situation = Autobahn) |
| | DANN Wartezeit = Sehr kurz |
| Regel 4: | WENN (Situation = Ortsdurchfahrt) |
| | DANN Wartezeit = Lang |
| Regel 5: | WENN (Situation = Parkiermodus) |
| | DANN Wartezeit = Lang |
| Regel 6: | WENN (Situation = Notfahrprogramm) |
| | DANN Wartezeit = Sehr lang |
| Regel 7: | WENN (Situation = Werkstattmodus) |
| | DANN Wartezeit = Sehr lang |

Diese Wartezeiten können zusätzlich mit dem erkannten Fahrertyp und/oder mit der erkannten Last oder auch mit den Sichtverhältnissen plausibilisiert werden. Mögliche Fuzzy-Regeln lauten dabei:

| | |
|---|---|
| Regel 8: | WENN (Last = Steigung) |
| | DANN Wartezeit = Sehr lang |

oder

| | |
|---|---|
| Regel 9: | WENN (Fahrertyp = Sportlich) |
| | DANN Wartezeit = Sehr lang |

In Worten ausgedrückt, bedeuten diese Regeln folgendes:

Regel 1: Wird ein Anhalten des Kraftfahrzeugs erkannt, sollte der Verbrennungsmotor möglichst umgehend abgeschaltet werden. Ein Anhalten des Kraftfahrzeugs kann dabei beispielsweise auch über ein von einer Verkehrsampel in Rotphasen ausgesendetes Signal oder mittels einer Staumeldung über einen Informationskanal erkannt werden.

Regel 2: Wird auf einer Autobahn vom Fahrer weder ein Antriebsmoment noch ein Bremsmoment angefordert, wird dies als Auffahren auf langsamere Verkehrsteilnehmer bis hin zu stehendem Verkehr in einer Stausituation gedeutet. Der Verbrennungsmotor sollte dann bereits nach sehr kurzer Zeit abgeschaltet werden.

Regel 3: Wird auf einer Landstraße vom Fahrer weder ein Antriebsmoment noch ein Bremsmoment angefordert, wird dies analog zur Autobahnfahrt als Auffahren auf langsamere Verkehrsteilnehmer bis hin zu stehendem Verkehr in einer Stausituation gedeutet. Der Verbrennungsmotor sollte dann ebenfalls bereits nach kurzer Zeit abgeschaltet werden. Um den Gegebenheiten einer Landstraße gerecht zu werden sollte die Wartezeit aber im Vergleich zu Autobahnfahrten erhöht werden.

Regel 4: Innerhalb einer Ortschaft kommt es häufig zu permanenten Wechseln von Beschleunigungs- und Bremsphasen. Häufig wird dabei vom Fahrer aber auch ein Ausrollen des Fahrzeugs gewünscht und somit weder ein Antriebsmoment noch ein Bremsmoment angefordert. Um bei derartigen Ortsdurchfahrten ein ständiges Abschalten und Wiederstarten des Verbrennungsmotors zu vermeiden, sollte die Wartezeit dabei verlängert werden.

Regel 5: Parkiervorgänge sind häufig mit Rangiervorgängen verbunden. Dabei treten zwangsläufig Situationen auf, in denen der Fahrer weder ein Antriebs- noch ein Bremsmoment anfordert. Um in diesen Fällen ein unerwünschtes Abschalten des Verbrennungsmotors zu vermeiden, wird bei Erkennen einer Parkiersituation eine lange Wartezeit festgelegt.

Regel 6: Notfahrprogramme werden immer dann aktiviert, wenn im Kraftfahrzeug eine Fehlfunktion einer Systemkomponente erkannt wird. Um Risiken insbesondere bezüglich der Betriebssicherheit vorzubeugen, wird die Wartezeit in diesen Fällen auf einen sehr großen Wert festgelegt. Dieser Wert kann im Grenzfall auch auf Unendlich gesetzt werden, so dass kein automatisches Abschalten des Verbrennungsmotors durch das Antriebsmanagement mehr erfolgt.

Regel 7: Für Reparatur- oder Wartungsarbeiten am Kraftfahrzeug ist es teilweise notwendig, den Verbrennungsmotor im Leerlauf laufen zu lassen. Um in derartigen Situationen ein unerwünschtes Abschalten des Verbrennungsmotors zu vermeiden, ist ein Werkstattmodus vorgesehen, wobei die Wartezeit auf einen sehr langen Zeitraum, bis hin zu Unendlich, festgelegt wird.

Regel 8: Wird an einer Steigung vom Fahrer weder ein Antriebs- noch ein Bremsmoment angefordert, so wird dies als mögliches Wendemanöver interpretiert. Um dem Fahrer dieses Wendemanöver ohne unerwünschtes Abschalten des Verbrennungsmotors zu ermöglichen, wird eine sehr lange Wartezeit festgelegt.

Regel 9: Sportliche Fahrer legen besonderen Wert auf die Fahrleistung ihres Kraftfahrzeugs. Ein regelmäßiges Abschalten des Verbrennungsmotors ist für eine sportliche Fahrweise ungeeignet und würde von solchen Fahrern als unangenehm empfunden. Aus diesem Grund wird bei Erkennen einer sportlichen Fahrweise die Wartezeit auf einen sehr hohen Wert festgelegt.

Neben diesen Regeln sind abhängig von der Konfiguration des jeweiligen Antriebsstrangs und der zugehörigen Steuereinheiten in einem Kraftfahrzeug weitere Regeln möglich und sogar notwendig. Ist beispielsweise ein Elektromotor als Startereinheit zum Starten des Verbrennungsmotors vorgesehen, ist vor jedem Abschalten des Verbrennungsmotors sicher zu stellen, dass der aktuelle Ladezustand der Fahrzeugbatterie ausreicht, um den Verbrennungsmotor erneut zu starten. Kann dies bei dem aktuellen Ladezustand der Fahrzeugbatterie nicht gewährleistet werden, muss die Wartezeit unbedingt auf einen Wert Unendlich gesetzt und damit ein Abschalten des Verbrennungsmotors verhindert werden.

Denkbar ist auch eine Adaption der Wartezeit an die Anforderungen des Fahrers. Stellt beispielsweise der Fahrer den Verbrennungsmotor während einer beliebigen Situation über den Zündschlüssel oder eine entsprechende Vorrichtung ab, so sollte ein lernendes System diese Anforderung des Fahrers übernehmen. Bei erneutem Auftreten dieser Situation, sollte nun das System den Verbrennungsmotor selbständig abstellen können.

## Patentansprüche

1. Verfahren zum Steuern des Antriebsstrangs eines Kraftfahrzeugs mit einem Verbrennungsmotor (1), der als Antriebsaggregat dient, einer Startereinheit (3) zum Starten des Verbrennungsmotors (1) und einem Getriebe (7), wobei das Verfahren folgenden Schritt einschließt:
- wird während einer festgelegten Wartezeit nach einem Öffnen des Antriebsstrangs kein Drehmoment vom Verbrennungsmotor (1) angefordert, so wird nach Ablauf der Wartezeit der Verbrennungsmotor (1) abgeschaltet,
wobei die Wartezeit zwischen dem Öffnen des Antriebsstrangs und dem Abschalten des Verbrennungsmotors (1) abhängig ist von der aktuellen Betriebssituation des Kraftfahrzeugs
**dadurch gekennzeichnet, dass** die aktuelle Betriebssituation derart bestimmt wird, dass Eingangssignale von verschiedenen Sensoren und Steuergeräten und/oder fahrzeugexternen Informationsquellen in einer Situationserkennungsschaltung (20) ausgewertet und in charakteristische, die aktuelle Betriebssituation charakterisierende Größen umgewandelt werden.

2. Verfahren nach Anspruch 1, **dadurch gekennzeichnet, dass** die Wartezeit durch eine Fuzzy-Logik (21) abhängig von den die aktuelle Betriebssituation charakterisierenden Größen festgelegt wird.

3. Verfahren nach einem der Ansprüche 1 oder 2, **dadurch gekennzeichnet, dass** die Wartezeit an Anforderungen des Fahrers angepasst wird.

## Claims

1. Method for controlling the drive train of a motor vehicle having an internal combustion engine (1) which serves as a drive unit, a starter unit (3) for starting the internal combustion engine (1) and a transmission system (7), wherein the method includes the following step:
- if, during a specified waiting period after the drive train has been disengaged, no torque is requested from the internal combustion engine (1), the internal combustion engine (1) is switched off after the waiting period has expired, with the waiting period between the disengaging of the drive train and the switching off of the internal combustion engine (1) being dependent on the current operating situation of the motor vehicle,
**characterised in that** the current operating situation is determined in such a way that input signals from different sensors and control devices and/or external information sources outside the vehicle are evaluated in a situation detection circuit (20) and converted into characteristic variables which characterise the current operating situation.

2. Method according to claim 1, **characterised in that** the waiting period is specified by means of fuzzy logic (21) as a function of the variables characterising the current operating situation.

3. Method according to one of claims 1 or 2, **characterised in that** the waiting period is adjusted to the driver's requirements.

## Revendications

1. Procédé de commande de la chaîne de propulsion d'un véhicule automobile comprenant un moteur à combustion (1) servant de groupe de propulsion, une unité de démarreur (3) pour démarrer le moteur à combustion (1) et une boîte de vitesses (7), le procédé comprenant l'étape suivants :
- si pendant un temps d'attente défini après une ouverture de la chaîne de propulsion, aucun couple de rotation n'est demandé au moteur à combustion (1), alors à l'issue du temps d'attente, le moteur à combustion (1) est coupé, le temps d'attente entre l'ouverture de la chaîne de propulsion et la coupure du moteur à combustion (1) dépendant de la situation d'exploitation actuelle du véhicule automobile,
**caractérisé en ce que** la situation d'exploitation actuelle est déterminée de telle sorte que des signaux d'entrée provenant de différents capteurs et appareils de commande et/ou de sources d'informations externes au véhicule sont évalués dans un circuit de reconnaissance de situation (20) et convertis en grandeurs caractéristiques caractérisant la situation d'exploitation actuelle.

2. Procédé selon la revendication 1, **caractérisé en ce que** le temps d'attente est défini par une logique floue (21) en fonction des grandeurs caractérisant la situation d'exploitation actuelle.

3. Procédé selon l'une quelconque des revendications 1 ou 2, **caractérisé en ce que** le temps d'attente est adapté aux demandes du conducteur.
